(19) Europäisches Patentamt
European Patent Office
Office européen des brevets

(11) EP 4 772 288 A1

(12) EUROPEAN PATENT APPLICATION
published in accordance with Art. 153(4) EPC

(43) Date of publication:
08.07.2026 Bulletin 2026/28

(21) Application number: 24859955.7

(22) Date of filing: 30.08.2024

(51) International Patent Classification (IPC):
B06B 1/04 (2006.01)   G06F 3/041 (2006.01)

(52) Cooperative Patent Classification (CPC):
B06B 1/04; G06F 3/041

(86) International application number:
PCT/JP2024/031167

(87) International publication number:
WO 2025/047930 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.08.2023 JP 2023141710

(71) Applicant: Minebea Mitsumi Inc.
Kitasaku-gun, Nagano 3890293 (JP)

(72) Inventors:
• SATO, Soichi
  Tokyo 206-8567 (JP)
• IBATA, Yuki
  Tokyo 206-8567 (JP)
• KINOSHITA, Yosuke
  Tokyo 206-8567 (JP)

(74) Representative: Tiburzi, Andrea et al
Barzanò & Zanardo Roma S.p.A.
Via Piemonte 26
00187 Roma (IT)

(54) **VIBRATION ACTUATOR AND CONTACT-TYPE INPUT DEVICE**

(57) This vibration actuator comprises: a core; a coil disposed around the core; and a substrate disposed on the core and integrally provided with a wiring part connected to the coil and an insulating part that is disposed inside the coil and insulates the coil and the core.

FIG. 9

EP 4 772 288 A1

## Description

Technical Field

The present invention relates to a vibration actuator and a contact-type input device including the vibration actuator.

Background Art

In the related art, a configuration is known in which vibration is imparted, by a vibration actuator, as a tactile operational sensation (a sensation of operating by touch) to a finger pad or the like of an operator who touches a display screen displayed on a touch panel that is a sensing panel (see Patent Literature (hereinafter, referred to as "PTL") 1).

PTL 1 discloses a mobile terminal device in which a vibration actuator is attached to a back surface of a touch panel via a vibration transmission section. In the vibration actuator of the device, a mover is disposed to be movable back and forth along a guide shaft that is disposed perpendicular to the touch panel in a housing fixed to the vibration transmission section. In the vibration actuator, although an impact sound may be generated by causing the mover to collide with the housing in response to an operation on the touch panel, vibration is imparted, via the vibration transmission section, to a fingertip pad that is in contact with the touch panel.

Citation List

Patent Literature

PTL 1
Japanese Patent Application Laid-Open No. 2015-070729

Summary of Invention

Technical Problem

In the vibration actuator of PTL 1, the mover is moved back and forth along the guide shaft that is disposed perpendicular to the display surface of the touch panel, so that the device itself has a length perpendicular to the display surface, that is, a thickness.

Therefore, a vibration actuator that can reduce the thickness and achieve a low profile is desired as the device itself.

In addition, a drive circuit of the vibration actuator of PTL 1 includes, as the mover, a magnet and two yokes sandwiching the magnet, and includes, as a stator, a bobbin surrounding a movable body and two coils wound around the bobbin, it takes time to assemble the mover and the stator. Therefore, there is a demand for reducing the number of parts and improving the assemblability.

Objectives of the present invention include providing a vibration actuator and a contact-type input device that are easy to assemble and can be reduced in thickness.

Solution to Problem

A vibration actuator according to the present invention is configured to include:

a core;
a coil disposed around the core; and
a board integrally including an interconnection section and an insulation section, the interconnection section being disposed on the core and connected to the coil, the insulation section being disposed inside the coil and insulating the coil from the core.

In the above-described configuration, the vibration actuator may be configured to include an electromagnet in which the coil is disposed at a central portion of the core and that includes the board; a plate that includes a magnetic body disposed to face both end portions of the core; and an elastic supporting part that supports the core on both sides of the coil and is connected to the plate, in which by a magnetic force generated by energizing the coil through the board, one of the coil or the plate is displaced to approach the other and vibrates.

A contact-type input device according the present invention is a contact-type input device in which the vibration actuator having the above configuration is disposed on a back surface of an operation surface, in which the coil is energized in response to a touch operation of a user on the operation surface, one of the coil or the plate is displaced to approach the other and vibrates, and a tactile sensation is presented to the user.

Advantageous Effects of Invention

According to the present invention, the assemblability is improved and the thickness can be reduced.

Brief Description of Drawings

FIG. 1 is an external perspective view of a vibration actuator according to Embodiment 1 of the present invention;
FIG. 2 is a plan view of the vibration actuator;
FIG. 3 is a bottom view of the vibration actuator;
FIGS. 4A and 4B are a front view and a rear view of the vibration actuator;
FIGS. 5A and 5B are a right side view and a left side view of the vibration actuator;
FIG. 6 is a sectional view taken along line A-A of FIG. 2;
FIG. 7 is a sectional view taken along line B-B of FIG. 2;
FIG. 8 is an exploded perspective view of the vibration actuator according to Embodiment 1 of the present invention;
FIG. 9 is a perspective view showing a state in which the coil is removed from a core body of the vibration actuator according to Embodiment 1 of the present invention;
FIG. 10 is an exploded perspective view of the core body;
FIG. 11 is a plan view of the board;
FIG. 12 is a left side view of the core body of the vibration actuator according to Embodiment 1 of the present invention;
FIG. 13 is a partial sectional view showing a positional relationship between the board and the coil in the core body of the vibration actuator according to Embodiment 1 of the present invention;
FIG. 14 is a diagram for describing a magnetic circuit of the vibration actuator;
FIG. 15 is a diagram for describing an assembling method of a movable part;
FIG. 16 is a diagram showing a circuit configuration of a control section of the vibration actuator according to Embodiment 1;
FIG. 17 is a diagram showing an example of a vibration presentation device including the vibration actuator;
FIG. 18 is an external perspective view of a vibration actuator according to Embodiment 2 of the present invention;
FIG. 19 is a plan view of the vibration actuator;
FIG. 20 is a bottom view of the vibration actuator;
FIGS. 21A and 21B are a front view and a rear view of the vibration actuator;
FIGS. 22A and 22B are a right side view and a left side view of the vibration actuator;
FIG. 23 is an exploded perspective view of the vibration actuator according to Embodiment 2 of the present invention;
FIG. 24 is a perspective view showing a state in which the coil is removed from the core body of the vibration actuator according to Embodiment 2 of the present invention;
FIG. 25 is an exploded perspective view of the core body;
FIG. 26 is a plan view of a vibration actuator of Variation 1;
FIG. 27 is a bottom view of the vibration actuator of Variation 1;
FIGS. 28A and 28B are a front view and a rear view of the vibration actuator of Variation 1;
FIGS. 29A and 29B are a right side view and a left side view of the vibration actuator of Variation 1;
FIG. 30 is a plan view of a vibration actuator of Variation 2;
FIG. 31 is a bottom view of the vibration actuator of Variation 2;
FIGS. 32A and 32B are a front view and a rear view of the vibration actuator of Variation 2; and
FIGS. 33A and 33B are a right side view and a left side view of the vibration actuator of Variation 2.

Description of Embodiments

Hereinafter, embodiments of the present invention will be described in detail with reference to the drawings.
In the present embodiment, the description will be made using an orthogonal coordinate system (X, Y, Z). The same orthogonal coordinate system (X, Y, Z) is also used for illustration of below-mentioned figures. Hereinafter, vibration actuator 10 is used in, for example, a contact-type input device, and a width, a depth, and a height of the contact-type input device correspond to lengths in the X direction, the Y direction, and the Z direction, respectively. In addition, a width, a depth, and a height of vibration actuator 10 also correspond to the lengths in the X direction, the Y direction, and the Z direction, respectively. In components constituting vibration actuator 10, a surface on a "plane side" (or an "upper side") is described as a "front surface" (or an "upper surface"), and a surface on a "back surface side" (or a "lower side") is described as a "back surface" (or a "lower surface").

(Embodiment 1)

<Overall configuration of vibration actuator 10>

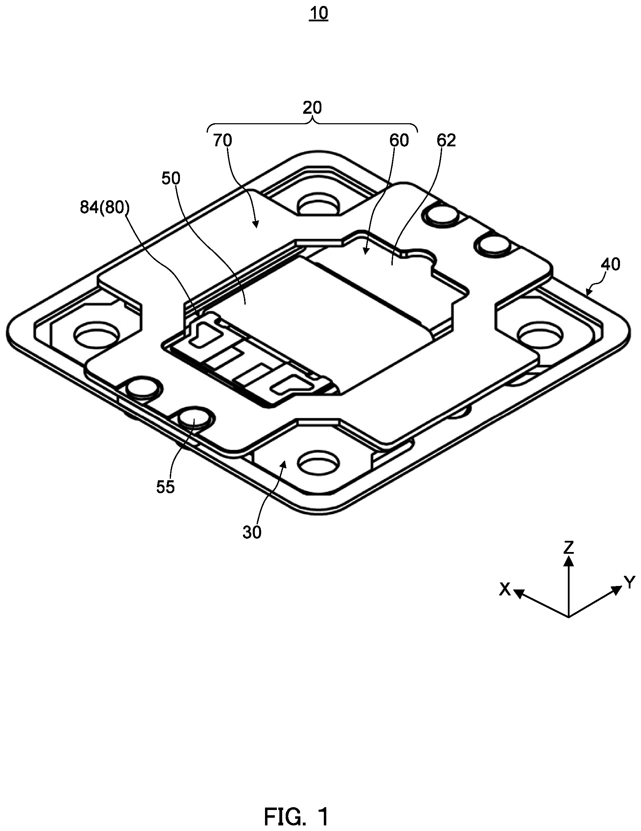

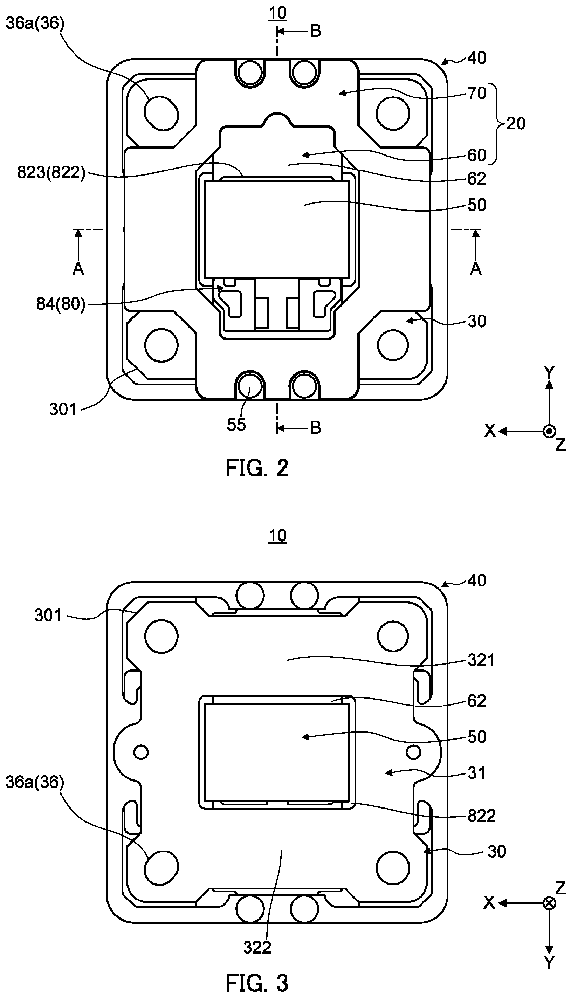

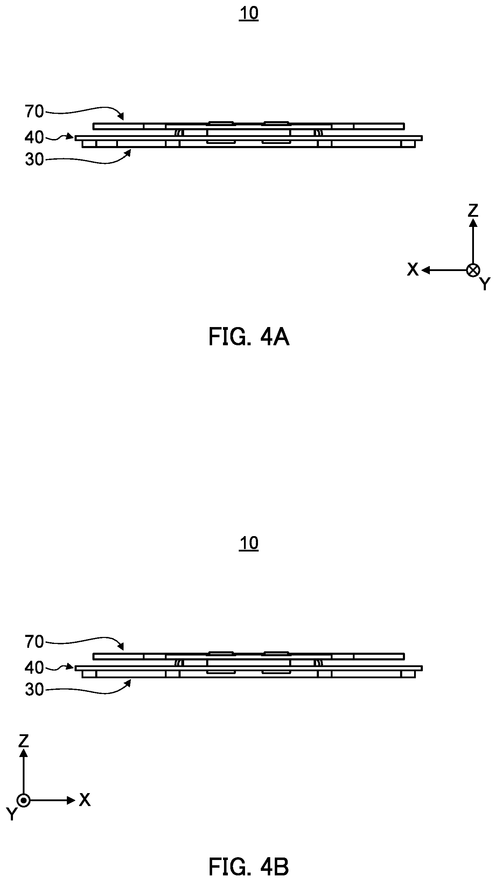

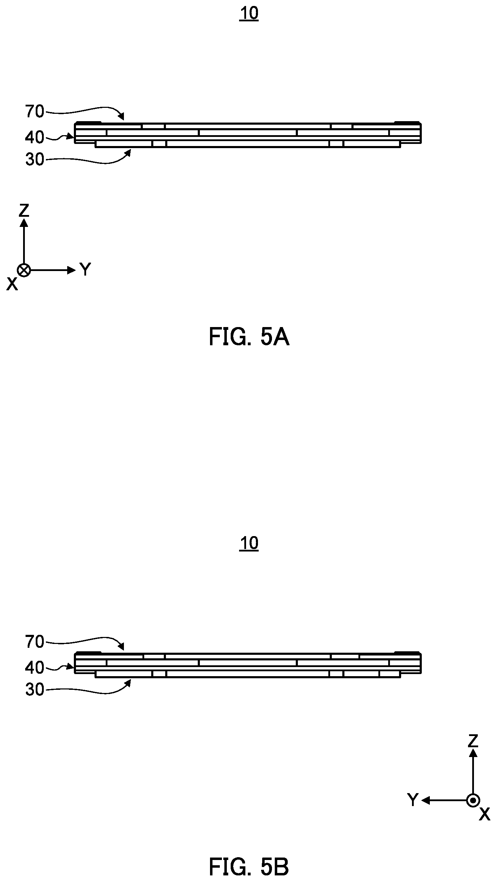

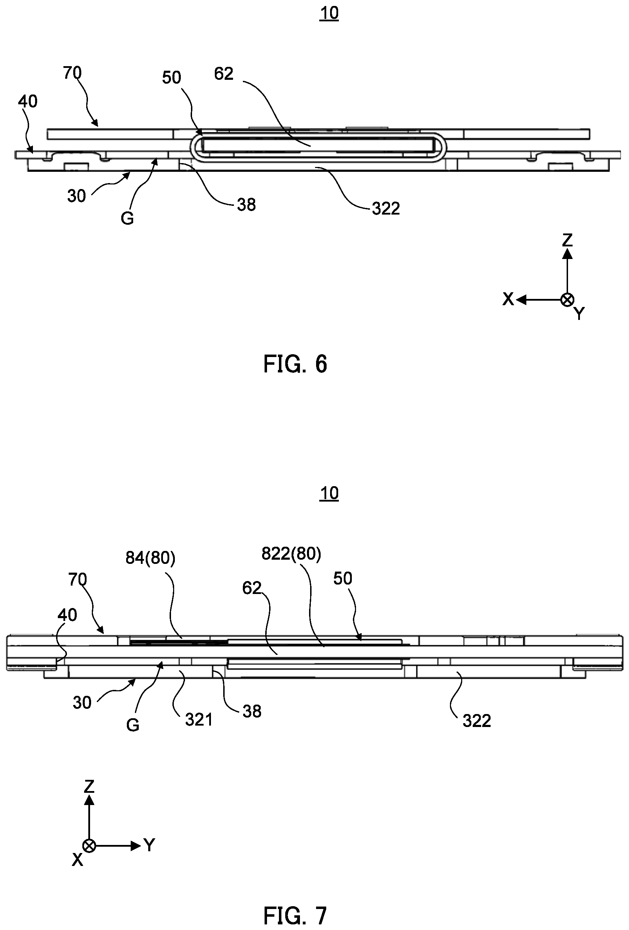

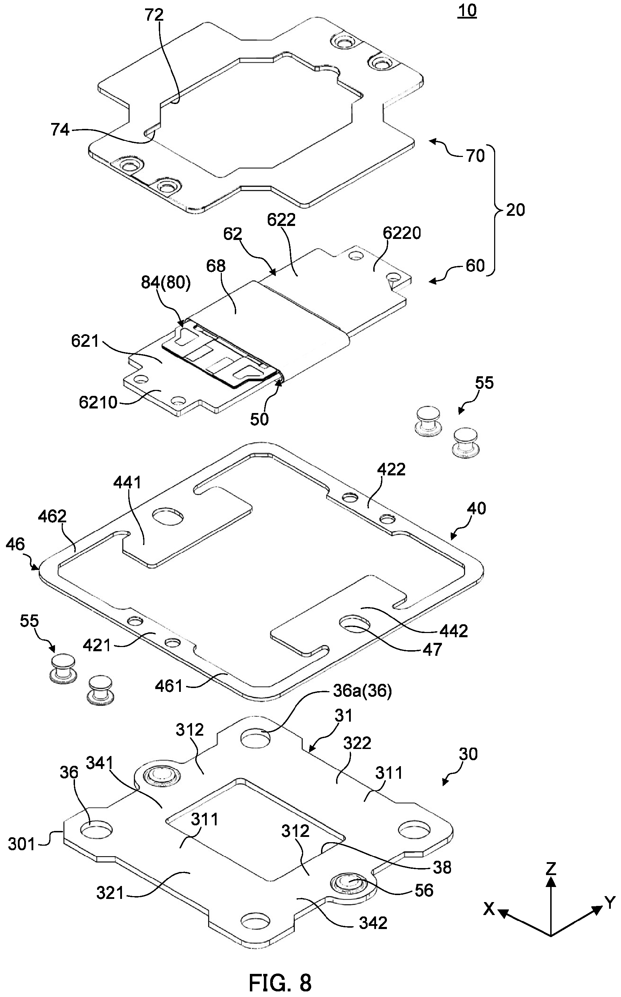

FIG. 1 is an external perspective view of a vibration actuator according to Embodiment 1 of the present invention, FIG. 2 is a plan view of the vibration actuator, and FIG. 3 is a bottom view of the vibration actuator. In addition, FIGS. 4A and 4B are a front view and a rear view of the vibration actuator, and FIGS. 5A and 5B are a right side view and a left side view of the vibration actuator. Further, FIG. 6 is a sectional view taken along line A-A of FIG. 2, FIG. 7 is a sectional view taken along line B-B of FIG. 2, and FIG. 8 is an exploded perspective view of the vibration actuator according to Embodiment 1 of the present invention.

Vibration actuator 10 is preferably used in a vibration presentation device (for example, a track pad or the like) that is a contact-type input device as an operation device as a vibration presentation section (operation surface) on which the operator performs a touch operation.

Vibration actuator 10 can impart, by vibrating the operation device, a tactile operational sensation (also referred to as a "tactile sensation" or a "sense of force") to the operator who operates the operation device by contacting the operation device in accordance with applications or use cases of the operation device.

Vibration actuator 10 is a flat plate or a thin plate-shaped thin vibration actuator. When the Z direction is a thickness direction of a plate, vibration actuator 10 is disposed to face a back surface side of the operation device in the thickness direction and vibrates the operation device.

Vibration actuator 10 shown in FIGS. 1 to 8 is formed in a thin plate shape and includes movable part 20, base part (hereinafter, also referred to as a "base plate") 30, and plate-shaped elastic part 40 as an elastic supporting part (elastic body) that supports movable part 20 to be movable with respect to base part 30.

The elastic supporting part is plate-shaped elastic part 40, but is not limited to the plate shape as long as movable part 20 is supported to be movable with respect to base part 30.

In vibration actuator 10, movable part 20 performs an approach and separation operation in the Z direction, which is the plate thickness direction, specifically, toward the base part 30 side, and vibrates, and the vibration as an operational feel is imparted to a user who operates the operation device to which vibration actuator 10 itself is attached.

In vibration actuator 10, all of movable part 20, base part 30, and plate-shaped elastic part (elastic supporting part) 40 are configured in a flat shape, and a space occupied in the thickness direction, which is the vibration direction, is configured to be as small as possible in a range in which movable part 20 is movable. Vibration actuator 10 can connect one of movable part 20 and base part 30 to the vibration presentation section that receives a pressing operation of the user.

<Movable Part 20>

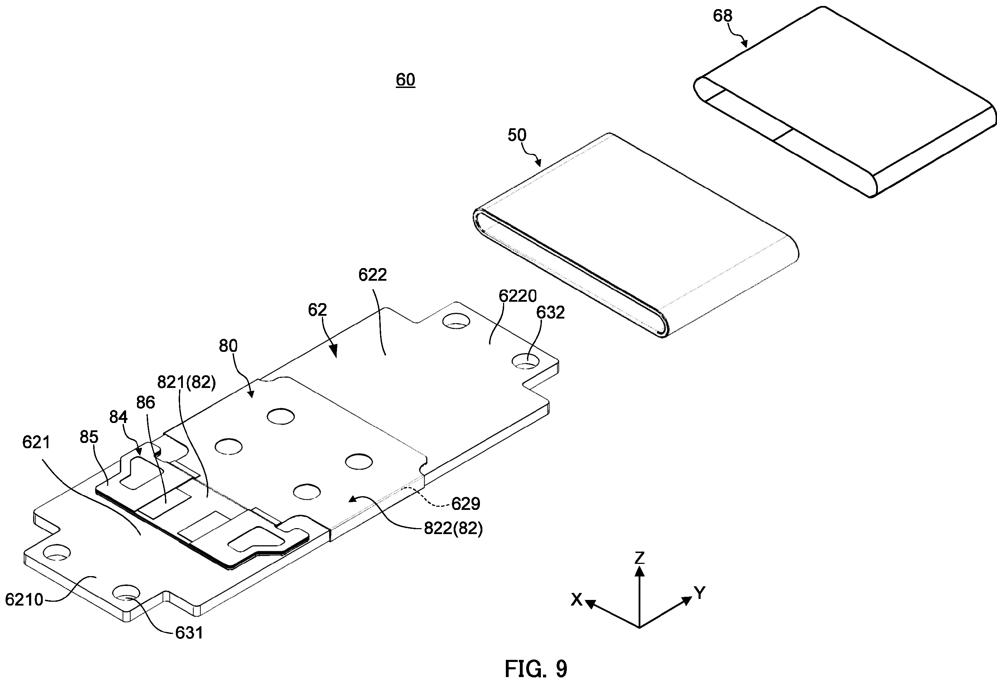

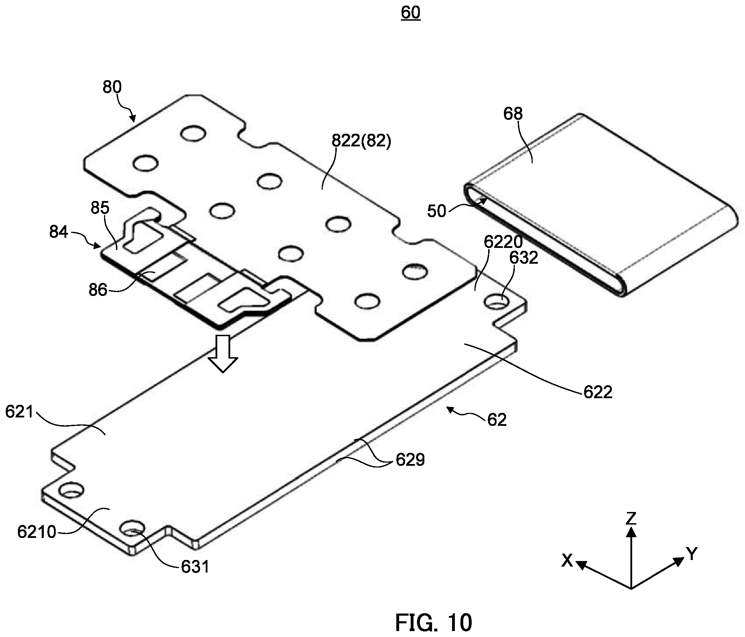

As shown in FIG. 8, movable part 20 includes core body 60 including coil 50 and plate-shaped weight part 70 as a weight part. Movable part 20 may be configured to include core body 60, but without including plate-shaped weight part 70. FIG. 9 is a perspective view showing a state in which the coil is removed from the core body of the vibration actuator according to Embodiment 1 of the present invention, and FIG. 10 is an exploded perspective view of the core body.

<Core Body 60>

As shown in FIGS. 8 to 10, core body 60 includes coil 50, core 62 to which coil 50 is externally fitted, board 80 connected to coil 50, and protective film part 68 that covers the outside of coil 50. Core body 60 constitutes an electromagnet including coil 50 and core 62, and power is supplied to coil 50 through board 80. Protective film part 68 is appropriately omitted in the figure.

Coil 50 is formed in a flat rectangular plate shape and is disposed to surround a central portion of flat rectangular plate-shaped core 62. Coil 50 is disposed on an outer periphery of the central portion of core 62 via insulation section 822 of board 80 and is provided to be less likely to directly contact core 62.

Core (magnetic core) 62 is a rectangular plate-shaped magnetic body, is surrounded by coil 50, and has both end portions 621 and 622 that protrude from coil 50 in a winding axis direction of coil 50.

Core 62 is magnetized by energizing coil 50 and functions as an electromagnet. Both end portions 621 and 622 are magnetic poles and generate a magnetic attractive force with a nearby magnetic body, that is, base part 30.

Specifically, in core 62, both end portions 621 and 622, particularly, the back surfaces of both end portions 621 and 622, serve as planar magnetic pole surfaces by energizing coil 50. Core 62 is preferably formed of, for example, a soft magnetic material such as a silicon steel plate, a permalloy, or a ferrite. In addition, core 62 may be composed of electromagnetic stainless steel, a sintered material, a Metal Injection Molded (MIM) material, a laminated steel sheet, an electro-galvanized steel sheet (SECC), or the like.

Core 62 is long in the winding axis direction of coil 50, and spring connecting portions 631 and 632 that are holes for bonding to plate-shaped elastic parts 40 are provided at both ends 6210 and 6220 of both end portions 621 and 622 that are spaced from each other in the longitudinal direction, which is the winding axis direction, in core 62.

In core 62, coil 50 is disposed at the central portion of the rectangular plate-shaped core body. The core body is wider than both ends 6210 and 6220, and is disposed on a front surface side, and board 80 that covers a part of the periphery of the core body is disposed on the core body.

<Board 80>

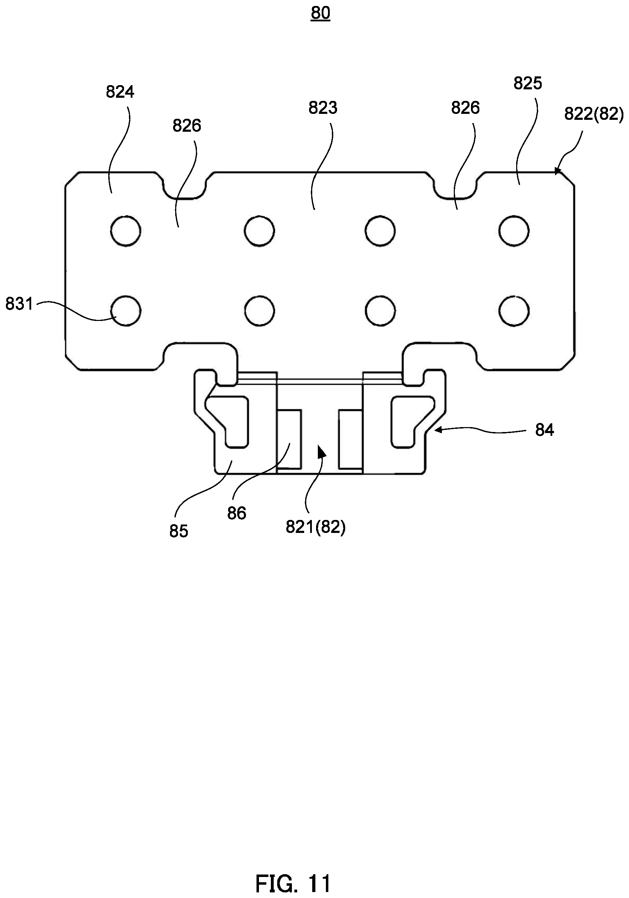

FIG. 11 is a plan view of the board. Board 80 integrally includes interconnection section 84 that is disposed on core 62 and has interconnections connected to coil 50, and insulation section 822 that insulates coil 50 and core 62 from each other.

Interconnection section 84 of board 80 is provided to be continuous with insulating sheet 82 (insulation section 822) having flexibility in board 80. Interconnection section 84 is wired on part 821 of insulating sheet 82 and includes coil-interconnection land portion 85 and external-connection land portion 86.

Board 80 is, for example, a flexible printed circuit and may be composed of a plurality of layers. For example, insulating sheet 82 is composed of a flexible material having insulating properties, such as polyimide, and interconnection section 84 is configured by providing interconnections having the coil-interconnection land portion 85, the external-connection land portion 86, and the like on a surface of a part of insulating sheet 82.

Interconnection section 84 is disposed on a surface of core 62 over an entire width of core 62. Insulation section 822 is wider than the part 821 on which interconnection section 84 is provided, and has a width in a direction orthogonal to the axial direction of core 62, which is a length sufficient to cover the outer periphery of core 62.

Insulation section 822 has flexibility, is disposed on a surface of the central portion of core 62, and is disposed to cover both side surfaces and a back surface by being wound around core 62 from the left and right sides at both left and right end portions.

Insulation section 822 includes, for example, surface covering portion 823 that has a sheet shape continuous to the part 821 in one insulating sheet 82 and is disposed on the surface of core 62, and back surface covering portions 824 and 825 that are continuous to both side portions of surface covering portion 823.

The back surface covering portions 824 and 825 are provided to be extended from both side portions that are spaced from each other in a direction orthogonal to a direction adjacent to interconnection section 84 in surface covering portion 823, via bendable portion 826. Back surface covering portions 824 and 825 cover the back surface of core 62 from both side portions of core 62, the front surface of which is covered by surface covering portion 823. Insulation section 822 may be configured to be bendable only at a corner portion of core 62, for example, without having flexibility over the entire surface, as long as core 62 can be wound.

Bendable portion 826 covers a corner portion (see edge portion 629 in FIG. 10) of core 62. Insulation section 822 is disposed to be wound on the outer periphery of core 62, and coil 50 is disposed on an outer surface side thereof.

Insulation section 822 functions as a protective film on an inner side of the coil and avoids a short circuit between coil 50 and core 62. Holes 831 for positioning board 80 in a case of being attached to core 62 are provided in insulation section 822. Board 80 is fixed to core 62 by using an adhesive, a double-sided tape, or the like. In addition, insulation section 822 is fixed via an adhesive or the like to coil 50 to be externally fitted to the insulation section.

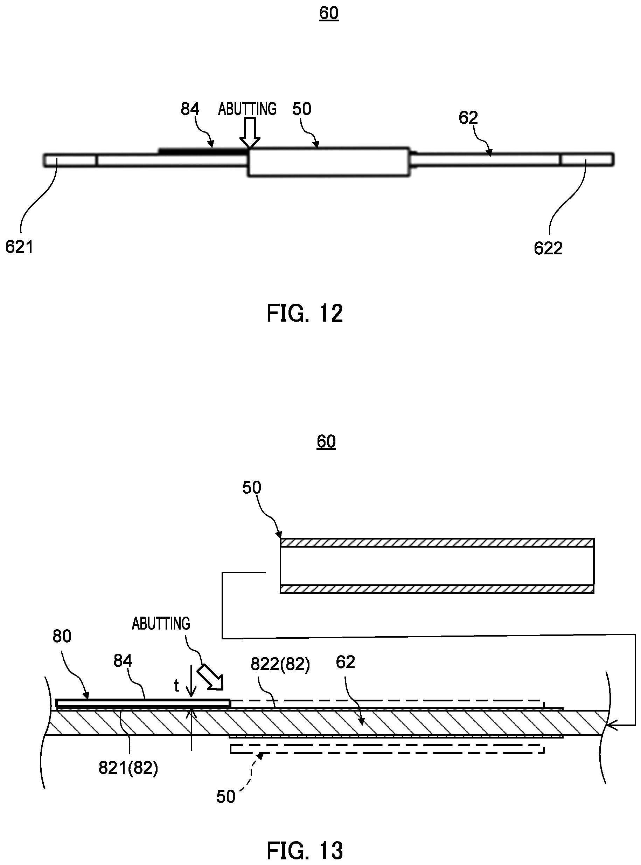

FIG. 12 is a left side view of the core body in the vibration actuator according to Embodiment 1 of the present invention, and FIG. 13 is a partial sectional view showing a positional relationship between the board and the coil in the core body of the vibration actuator according to Embodiment 1 of the present invention.

As shown in FIGS. 12 and 13, in core body 60, interconnection section 84 of board 80 has thickness t on core 62, and insulation section 822 is disposed adjacent to interconnection section 84. That is, interconnection section 84 has a thickness larger than insulation section 822 on core 62 and is provided adjacent to insulation section 822 on core 62.

When coil 50 wound in a tubular shape in advance is externally fitted to insulation section 822 or when tubular coil 50 is provided by winding a coil wire on insulation section 822, coil 50 is positioned on insulation section 822. In this case, coil 50 is provided at a position adjacent to interconnection section 84, coil 50 abuts on a part of interconnection section 84, and interconnection section 84 functions as positioning of coil 50. As a result, in board 80, interconnection section 84 can suitably allow coil 50 to be externally fitted to core 62 via insulation section 822.

In addition, since the corner portion (see edge portion 629 in FIG. 10) of rectangular plate-shaped core 62 is covered with insulation section 822, coil 50 can be suitably externally fitted to core 62 via insulation section 822 without being damaged by edge portion 629 of core 62.

Core body 60 includes the board (for example, an FPC) 80 that has an insulating function with respect to core 62 on an inner side of coil 50 and an interconnection function for coil 50, at the central portion of core 62. As a result, in a case of assembling core body 60 and assembling vibration actuator 10, it is possible to easily assemble the thin and low-profile vibration actuator without separately requiring a member having an individual function.

<Plate-Shaped Weight Part 70>

Plate-shaped weight part 70 shown in FIGS. 1 to 8 functions as a weight that promotes vibration and is provided corresponding to a shape of core 62, for example, a lateral width (length in the X direction) and a length in the depth direction (length in the Y direction).

Plate-shaped weight part 70 is fixed to core 62 positioned on both end portions of coil 50. For example, plate-shaped weight part 70 is fixed to plate-shaped elastic part 40 at spring connecting portions 631 and 632 of core 62 via fastening members 55.

Plate-shaped weight part 70 is a frame-shaped member having an opening (opening portion 72) in a region of coil 50, and has opening portion 74 in a region of interconnection section 84 continuously with opening portion 72.

Since plate-shaped weight part 70 is fixed to core body 60 in a state where the thicknesses of coil 50 and interconnection section 84 are relieved through opening portions 72 and 74, vibration actuator 10 can be reduced in thickness while adjusting the vibration.

In addition, a weight of plate-shaped weight part 70 can be optionally set, and can be adjusted, for example, by adjusting a length of plate-shaped weight part 70 in the Y direction, adjusting a length in the Z direction, adjusting a material, or the like. As described above, the weight of movable part 20 can be adjusted by plate-shaped weight part 70, and the natural frequency can be set by the adjustment. In a case where a disposition space in the thickness (Z direction) is limited, the shape may be a shape in which the weight is increased in the XY direction. In a case where the vibration presentation section (for example, a track pad body or the like) that receives the pressing operation of the user is attached to the movable part 20 side, it is preferable that the vibration presentation section is attached to plate-shaped weight part 70 via a fixing material such as an adhesive, a fastening member, and a pressure sensitive adhesive.

<Base Part 30>

As shown in FIGS. 1 to 8, base part 30 supports movable part 20 to be movable in an approach and separation direction of base part 30, that is, in the Z direction in FIG. 1, via plate-shaped elastic part 40. Base part 30 includes facing portions 321 and 322 that are magnetic bodies disposed to face both end portions 621 and 622 of core 62 with a gap (space) G in a facing direction intersecting the winding axis direction of coil 50. Base part 30 is a flat-shaped member having a predetermined thickness in the Z direction, for example, has a plate shape, and forms a bottom surface of vibration actuator 10. Base part 30 may be referred to as a base plate.

Base part 30 includes base body portion 31 that is a magnetic body, and base body portion 31 is provided with facing portions (magnetic bodies) 321 and 322 having magnetism that are disposed to face both end portions 621 and 622 of core 62, spring connecting portions 341 and 342, and fixing portions 36.

Base body portion 31 has opening portion 38 at a center and is formed in a square frame shape in plan view by pairs of adjacent side portions 311 and 312. Opening portion 38 is a space into which a lower portion of coil 50 is inserted, and is formed in a shape corresponding to an outer shape of coil 50, for example, a square shape.

In base body portion 31, facing portions 321 and 322 that are magnetic bodies are provided respectively on the pair of side portions (X side portions) 311 that face each other and are spaced from each other, and spring connecting portions 341 and 342 are provided respectively on the pair of side portions (Y side portions) 312 adjacent to the pair of side portions 311.

The pair of side portions 311 and the other pair of side portions 312 are a planar body, and notches for securing a deformation region of a part of plate-shaped elastic part 40 are formed at central portions of four outer edge portions constituting the outer peripheral portion of base body portion 31.

Facing portions (facing surfaces) 321 and 322 are a part of base part 30 and are magnetic bodies disposed to face both end portions 621 and 622 of core 62 with a gap (space) G in a facing direction intersecting the winding axis direction of coil 50, for example, the Z direction.

Facing portions 321 and 322 are attracted to both end portions 621 and 622 by a magnetic attractive force generated between the back surfaces of both end portions 621 and 622 of core 62 by energizing coil 50. That is, facing portions 321 and 322 pull both end portions 621 and 622.

Facing portions 321 and 322 are formed at central portions of the pair of side portions 311, for example, and are disposed at positions that sandwich opening portion 38 in the Y direction.

Since facing portions 321 and 322 are surfaces that entirely face the back surfaces of both end portions 621 and 622, magnetic flux can efficiently flow between the facing portions and the back surfaces of both end portions 621 and 622.

Facing portions 321 and 322 are ferromagnetic materials as a part of base body portion 31, and are preferably formed of, for example, iron (Fe), cobalt (Co), nickel (Ni), or gadolinium (Gd). Facing portions 321 and 322 are formed of a metal material (for example, iron), for example, together with spring connecting portions 341 and 342 and fixing portions 36 as base body portion 31.

Both end portions 621 and 622 are disposed above (in the Z direction) facing portions 321 and 322, while being spaced from each other and facing each other, thereby forming a left-right symmetrical shape about the center in the X direction. In addition, formation is front-rear symmetrical with respect to the center in the Y direction, except for the position of interconnection section 84 of board 80. Spring connecting portions 341 and 342 are disposed to sandwich opening portion 38 in the X direction, and are joined to base-part-side fixing portions 441 and 442 of plate-shaped elastic part 40 on the front surface side of base part 30.

Fixing portions 36 are, for example, a fastening hole for fastening base part 30 via a fastening member to an operation device (vibration presentation section) on which the operator performs a touch operation or a housing (arrangement portion) in which the operation device is disposed. Fixing portions 36 are formed at four corners of base part 30, and can reliably fasten and fix base part 30 to a fixing target. Fixing portions 36 are formed at the four corners, but the number of fixed parts 36 may be any number as long as base part 30 can be fixed to the fixing target. One of the fastening holes as fixing portions 36 may be a long hole (see fixing portion 36a shown in FIGS. 2 and 8). Fixing portions 36 are disposed to correspond to portions corresponding to fixing portions 36, and fixing portions 36 are fixed to the portions by inserting the fastening members such as screws into fixing portions 36, thereby fixing vibration actuator 10 to the portions. In this case, after the fastening members are inserted through fixing portions 36 other than the long hole (in particular, the fixing portion opposite the long hole), fastening can be performed via the long hole. As a result, in a case of fixing vibration actuator 10 to a predetermined position, it can be suitably fixed even in a case of having a slight error. In addition, one of the corner portions of the plate portion 30 in which fixing portions 36 are disposed may be formed as a chamfered corner portion 301 (for example, a C surface) (see FIG. 2). As a result, the orientation of vibration actuator 10 during assembly can be visually recognized, and the assembly work including interconnection and the like can be suitably performed.

<Plate-Shaped Elastic Part 40>

Specifically, plate-shaped elastic part 40 is an elastic leaf spring, and supports movable part 20 such that the movable part is movable with respect to base part 30 in the thickness direction (Z direction). Plate-shaped elastic part 40 is formed in a thin plate frame shape having a predetermined thickness (thickness in the Z direction), and is disposed in a layered manner between base part 30 and movable part 20 in the thickness direction (Z direction).

Plate-shaped elastic part 40 is connected to each of movable part 20 (specifically, core body 60) and base part 30, and joins plate-shaped movable part 20 (core body 60) and the plate-shaped base part 30 to each other such that they are separated by the thickness of the elastic part, that is, with gap G being provided (see FIG. 7).

In addition, plate-shaped elastic part 40 includes a pair of side portions 461 that are parallel to each other and constitute a frame-shaped body surrounding base part 30, and another pair of side portions 462 that are adjacent to the pair of side portions 461 and face each other. The pair of side portions 461 are joined respectively to spring connecting portions 631 and 632 of movable part 20 via movable-part-side fixing portions 421 and 422. On the other hand, the other pair of side portions 462 are connected to spring connecting portions 341 and 342 of base part 30 via base-part-side fixing portions 441 and 442.

Plate-shaped elastic part 40 includes elastic body portion 46 that includes arms connecting movable-part-side fixing portions 421 and 422 and base-part-side fixing portions 441 and 442 and elastically deforming. The arm portions are formed in a frame shape surrounding base part 30 in plan view, for example, by being formed in an L-shape, and is deformable in the Z direction on the outer peripheral side of base part 30.

In elastic body portion 46, movable-part-side fixing portions 421 and 422 and side portions of L-shaped arms that are linearly connected to movable-part-side fixing portions 421 and 422 constitute a pair of side portions 461 that are parallel to each other, and base-part-side fixing portions 441 and 442 are formed on the other pair of side portions 462 adjacent to the pair of side portions 461 to protrude inward.

In plate-shaped elastic part 40, elastic body portion 46 includes movable-part-side fixing portions 421 and 422, and is connected to base-part-side fixing portions 441 and 442, and elastic body portion 46, movable-part-side fixing portions 421 and 422, and base-part-side fixing portions 441 and 442 are disposed on the same plane.

Plate-shaped elastic part 40 is in a state of supporting movable part 20 (specifically, core body 60) in a balanced and symmetrical manner in directions (X direction and Y direction) perpendicular to a direction (vibration direction) facing base part 30 with respect to base part 30.

Movable-part-side fixing portions 421 and 422 are planar, and are provided at central portions of a pair of side portions of elastic body portion 46 disposed on the outer side of base part 30 in plan view. Movable-part-side fixing portions 421 and 422 are fixed to the back surfaces of spring connecting portions 631 and 632 of core 62 by surface contact on the surface. Movable-part-side fixing portions 421 and 422 are provided to be symmetrical in each of the directions with respect to the center in the X direction or the center in the Y direction. Base-part-side fixing portions 441 and 442 are planar, and are fixed in a state of being stacked on spring connecting portions 341 and 342 of base part 30.

Base-part-side fixing portions 441 and 442 and spring connecting portions 341 and 342 may be fixed by using a fastening member such as a screw, a bolt, or the like, an adhesive, or the like, but may be joined and fixed to each other via recessed portions and protruding portions that are provided on both and shaped to be capable of being fitted to each other. For example, spring connecting portions 341 and 342 are provided with protruding boss portions (protruding portions) 56 that protrude to base-part-side fixing portions 441 and 442 side, and base-part-side fixing portions 441 and 442 are provided with joining holes 47 at positions corresponding to boss portions 56. Joining holes 47 may be long hole in part of which boss portions 56 are internally fitted. Joining holes 47 in which boss portions 56 are disposed inside function as positioning of base-part-side fixing portions 441 and 442 with respect to base part 30, and fixes boss portions 56 to be press-fitted.

When boss portions 56 are fixed to joining holes 47 by press-fitting, fixation is performed by using an adhesive or laser welding between both. Groove portions are formed around root portions of boss portions 56, and the groove portions have a function as an adhesive reservoir in a case of using an adhesive. In addition, the groove portions have a function as an escape space for chips and debris generated when press-fitting boss portion 56 into joining hole 47. Each of the groove portions is formed as a relief portion having a round shape at the root of boss portion 56 in a case of machining boss portion 56 on base part 30.

Since plate-shaped elastic part 40 is a rectangular frame body (here, a thin plate frame-shaped body), the number of parts can be reduced and the entire body can be thinned, and plate-shaped elastic part 40 can be manufactured without bending processing or the like of the parts. Further, plate-shaped elastic part 40 is a frame body, and can thus be disposed in the frame body to be disposed without interfering with the other parts.

In addition, as will be described below, plate-shaped elastic part 40 can determine the amount of displacement and the natural frequency of movable part 20 by setting a spring constant $K_{sp}$, and generates a mechanical tactile sensation by causing the displacement in a case of driving movable part 20, that is, in a case of energizing coil 50.

Plate-shaped elastic part 40 includes the arms of elastic body portion 46 in order to ensure elasticity, and the arm shape may be any shape as long as the arms are capable of connecting movable-part-side fixing portions 421 and 422 to base-part-side fixing portions 441 and 442 such that they are displaceable in the Z direction. In addition, elastic body portion 46 may have any shape as long as elastic body portion 46 is formed to be deformed in a balanced manner to move core body 60 in the Z direction (vibration application direction) in a state of being positioned on the XY plane.

Plate-shaped elastic part 40 is deformed between the upper surface of core 62 or coil 50 and the bottom surface of base part 30. As described above, plate-shaped elastic part 40 is formed in a rectangular frame shape, and movable-part-side fixing portions 421 and 422 and base-part-side fixing portions 441 and 442 are disposed at central portions of the respective side portions constituting the rectangular frame. In a case of driving core body 60, movable-part-side fixing portions 421 and 422 are displaced with respect to base-part-side fixing portions 441 and 442.

Core body 60 is supported on both sides by the L-shaped arms that connect movable-part-side fixing portions 421 and 422 to base-part-side fixing portions 441 and 442 in elastic body portion 46. Therefore, it is possible to disperse the stress in a case of elastic deformation, and it is possible to move core body 60 in the vibration direction (Z direction) without inclining core body 60 with respect to base part 30, and it is possible to improve the reliability of the vibration state and improve the stability.

<Magnetic Circuit of Vibration Actuator 10>

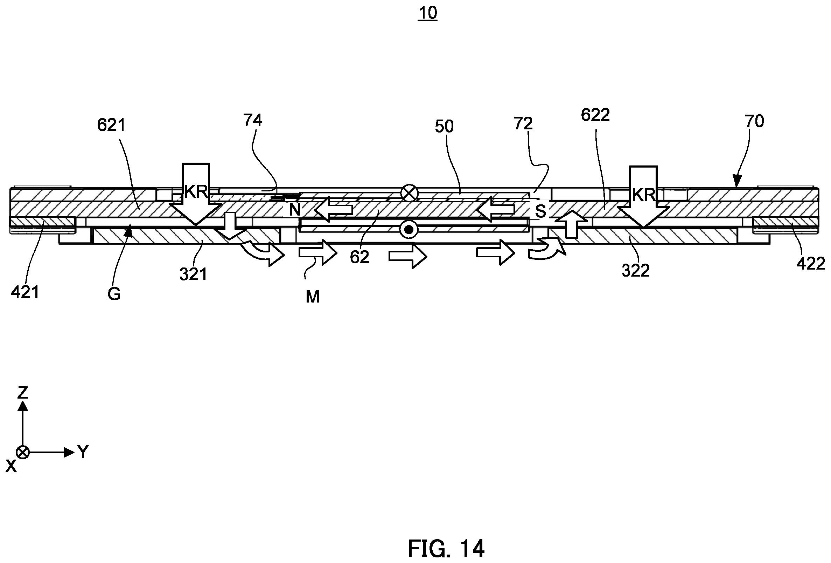

FIG. 14 is a diagram for describing a magnetic circuit of the vibration actuator. FIG. 14 is a sectional view of vibration actuator 10 shown in FIG. 7, and a portion of the magnetic circuit not illustrated has the same magnetic flux flow M as the portion illustrated.

In a case where a current is caused to flow through coil 50 of vibration actuator 10 shown in FIG. 14, core 62 is excited to generate a magnetic field, and both end portions 621 and 622 of core 62 serve as magnetic poles. For example, in a case where one end portion 621 of core 62 is a N pole and other end portion 622 is an S pole, a magnetic circuit indicated by the magnetic flux flow M is formed between core 62 and facing portions 321 and 322 of base part 30.

The magnetic flux flow M in the magnetic circuit flows from one end portion 621 to facing portion 321 facing one end portion 621, reaches facing portion 322 from facing portion 321, flows from facing portion 322 to other end portion 622 of core 62, and is emitted again from one end portion 621 through core 62.

As a result, by the principle of the electromagnetic solenoid, both end portions 621 and 622 of core 62 generate a magnetic attractive force KR. That is, in the electromagnet, the magnetic attractive force KR is generated in a direction orthogonal to the winding axis of coil 50, and both end portions 621 and 622 are attracted to both of facing portions 321 and 322 of base part 30.

Since base part 30 is fixed to a housing or the like via fixing portions 36, both end portions 621 and 622 are attracted to and adhere to facing portions 321 and 322. That is, plate-shaped elastic part 40 is deformed, and movable part 20 is attracted to the base part 30 side. Movable part 20 approaches the position side (in the -Z direction) where base part 30 is fixed.

Next, in a case where the energization of coil 50 is released, the magnetic field disappears, the magnetic attractive force KR of movable part 20 disappears, and the biasing force of plate-shaped elastic part 40 deformed to the base part 30 side is released. That is, a reaction force (force in the -KR direction) of the spring as plate-shaped elastic part 40 is generated. As a result, movable part 20 is moved by the reaction force (-KR) of plate-shaped elastic part 40 to move to the original position (position in the non-driven stationary state as a reference position as shown in FIG. 7) (i.e., move in the positive Z direction opposite to the attraction direction of the magnetic attractive force KR). In this case, movable part 20 is moved to a position displaced in a direction away from base part 30 from the stationary position, which is the stationary state, by the reaction force (-KR), and generates a strong vibration.

This vibration is repeatedly freely vibrated while being damped with the damping of the biasing force. In addition, movable part 20 may be moved back and forth in the Z direction to generate the vibration by repeating the energization and the release of coil 50. As described above, in vibration actuator 10, movable part 20 is supported in a state of being suspended by plate-shaped elastic part 40 with respect to base part 30. When movable part 20 is energized, movable part 20 functions as an electromagnet, is mechanically displaced by the magnetic attractive force generated between movable part 20 and facing portions 321 and 322 that are magnetic bodies, and then freely vibrates.

As described above, in vibration actuator 10, movable part 20 is moved to the base part 30 side by the magnetic attractive force generated between core 62 and facing portions (magnetic bodies) 321 and 322 by energizing coil 50. The movement of movable part 20 causes movable part 20 to vibrate by the elastic force (biasing force) generated in plate-shaped elastic part 40 to impart a tactile sensation to the user.

In vibration actuator 10, coil 50 is a plate shape, and is wound around thin plate-shaped core 62 via sheet-shaped insulation section 822 of board 80 connected to coil 50. In addition, core 62 is supported to be movable in the Z direction with respect to base part 30 by plate-shaped elastic part 40 in a state where coil 50 is inserted into opening portion 38 of thin plate-shaped base part 30.

Vibration actuator 10 can be configured to have only a height of thin plate-shaped core 62, plate-shaped weight part 70 or coil 50, plate-shaped elastic part 40, and base part 30 stacked on one another. A case where plate-shaped weight part 70 is included in the stacked elements constituting the height in vibration actuator 10 is a case where the upper surface of the portion of coil 50 on core 62 is lower than the upper surface of plate-shaped weight part 70. On the other hand, a case where coil 50 is included in the stacked elements constituting the height in vibration actuator 10 is a case where the upper surface of coil 50 is higher than the upper surface of plate-shaped weight part 70 or vibration actuator 10 does not include plate-shaped weight part 70.

Vibration actuator 10 is configured to be thin and plate-shaped and vibrates without including a magnet, and is reduced in thickness, so that it is possible to achieve space saving of the disposition space. That is, the configuration of vibration actuator 10 has a configuration that is further thinned than a configuration in which members that generate magnetism and drive the movable part in the Z direction are provided to be superimposed in the Z direction, such as disposing the coil and the magnet to face each other in the Z direction. Vibration actuator 10 can be thinned and miniaturized, and can impart a suitable tactile sensation corresponding to the pressing operation of the user on the vibration presentation section.

As described above, in vibration actuator 10 that is thinned and miniaturized, coil 50 can be disposed in a state of being insulated from core 62 by using board 80 attached to core 62 in order to supply power to coil 50 without separately using an insulating member that insulates coil 50 and core 62 from each other.

<Driving Principle of Vibration Actuator 10>

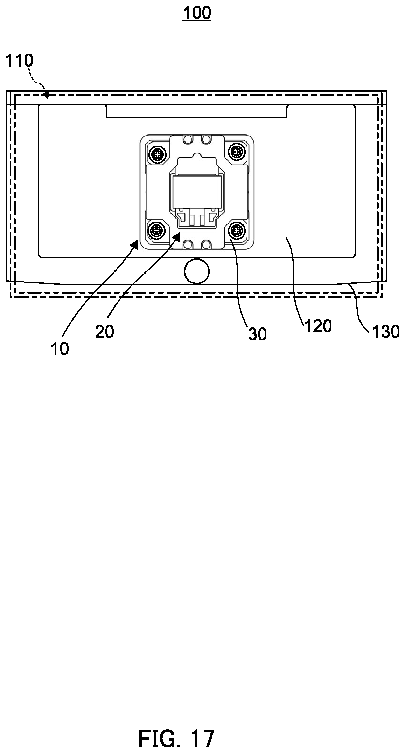

Hereinafter, the driving principle of vibration actuator 10 will be briefly described. Vibration actuator 10 can also be driven by using a pulse to generate a resonance phenomenon by using the following motion equation and circuit equation. As an operation, vibration actuator 10 may not be resonance-driven, but may express an operational feel in a track pad as vibration presentation device 100 shown in FIG. 17, for example, and may be driven by inputting a current pulse (singular or plural) via a control section (not shown).

Movable part 20 in vibration actuator 10 performs a reciprocating motion based on Expressions (1) and (2).

[1]

$$m\,\frac{d^2 x(t)}{dt^2} = K_f\,i(t) - K_{sp}\,x(t) - D\,\frac{dx(t)}{dt} \quad \text{... (Expression 1)}$$

m: mass [kg]

x(t): displacement [m]
$K_f$: thrust constant [N/A]
i(t): current [A]
$K_{sp}$: spring constant [N/m]
D: damping coefficient [N/(m/s)]

[2]

$$e(t) = Ri(t) + L\frac{di(t)}{dt} + K_e\frac{dx(t)}{dt} \qquad \ldots \text{(Expression 2)}$$

e(t): voltage [V]
R: resistance [Ω]
L: inductance [H]
$K_e$: reverse electromotive force constant [V/(rad/s)]

That is, the mass m [Kg], the displacement x(t) [m], the thrust constant $K_f$ [N/A], the current i(t) [A], the spring constant $K_{sp}$ [N/m], the damping coefficient D [N/(m/s)], and the like in vibration actuator 10 can be appropriately changed within a range in which Expression (1) is satisfied. In addition, the voltage e(t) [V], the resistance R [Ω], the inductance L [H], and the reverse electromotive force constant $K_e$ [V/(rad/s)] can be appropriately changed within a range in which Expression (2) is satisfied.

As described above, the vibration in vibration actuator 10 is determined by the mass m of movable part 20 and the spring constant Ksp of the metal spring (leaf spring in the present embodiment) as plate-shaped elastic part 40. In addition, the vibration generated by actuator body K can be set by the input voltage (pulse) and, if a vibration damping part is provided, the degree of damping of the vibration damping part.

<Assembly of Core Body 60>

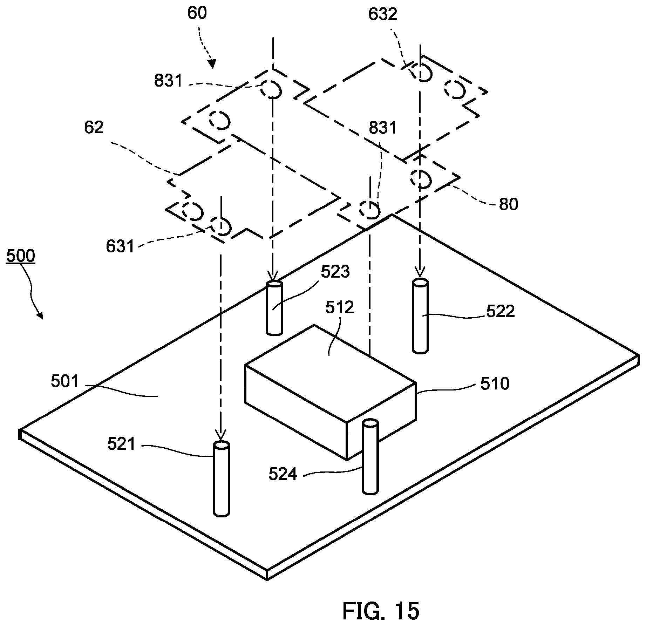

FIG. 15 is a diagram for describing an assembling method of the movable part. In a case of assembling core body 60, for example, jig 500 shown in FIG. 15 is used. Jig 500 includes base part 510 and pillar portions 521 to 524 on body plate portion 501. Base part 510 has placement surface 512 on which core 62 is placed, and pillar portions 521 and 522 are disposed such that the central portion of core 62 is positioned on placement surface 512 when pillar portions 521 and 522 are inserted into spring connecting portions 631 and 632. Pillar portions 523 and 524 are disposed to correspond to positioning holes 831 of board 80. As a result, pillar portions 521 and 522 are inserted into spring connecting portions 631 and 632 of core 62, so that the central portion of core 62 is placed on placement surface 512 and is positioned. In this state, board 80 is brought close to core 62, from above and pillar portions 523 and 524 are inserted into positioning holes 831. As a result, board 80 can be attached to core 62 at an accurate position by placing surface covering portion 823 on the central portion of core 62 in a state where the board is orthogonal to core 62, by fixing surface covering portion 823 with a double-sided tape or the like, and by turning the back surface covering portion to the back side of core 62 to cover the back surface of core 62.

<Drive Circuit of Vibration Actuator 10>

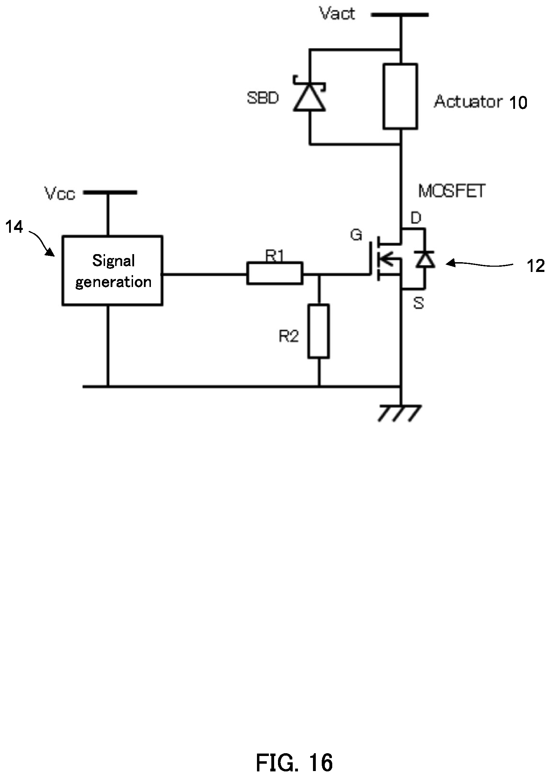

FIG. 16 is a diagram showing a circuit configuration of a control section of the vibration actuator according to Embodiment 1.

The drive circuit shown in FIG. 16 is included in the control section of vibration actuator 10. The drive circuit includes switching element 12 as a current pulse supply section configured by a Metal-Oxide-Semiconductor Field-Effect Transistor (MOSFET), signal generation section 14 as a voltage pulse application section, resistors R1 and R2, and Schottky Barrier Diodes (SBD). The drive circuit is an example of a specific configuration of an actuator driver.

Signal generation section 14 connected to the power supply voltage Vcc is connected to a gate of switching element 12. Switching element 12 is a discharge switching switch. Switching element 12 is connected to vibration actuator 10 (indicated by [Actuator] in FIG. 16), particularly signal generation section 14 of vibration actuator 10. A voltage is applied to vibration actuator 10 from the power supply section Vact. Therefore, switching element 12 is turned on and off by the gate voltage control by signal generation section 14, and the current flows in a case where switching element 12 is turned on, and coil 50 that functions as a vibration generation section is energized in vibration actuator 10.

The control section may include a calculation processing device configured by a Central Processing Unit (CPU) or the like that controls the entire vibration presentation device on which vibration actuator 10 is mounted, a main memory device configured by, for example, a Random Access Memory (RAM) that operates as a working area of the calculation

**EP 4 772 288 A1**

processing device, and an auxiliary memory device configured by, for example, a non-volatile memory such as a flash memory or a hard disk that stores an operation program of the calculation processing device. The configuration including the calculation processing device, the main memory device, and the auxiliary memory device is, for example, an example of a specific configuration of a microcomputer. The calculation processing device reads out various control programs and various data and the like associated with the program (hereinafter, collectively referred to as "programs and the like") from the auxiliary memory device and stores the various control programs and the various data and the like in the main memory device, and executes the control program while using the data and the like to realize various functions of the vibration presentation device. For example, the data may include various pulse waveform data for expressing various patterns such as a plurality of different vibration damping periods and a plurality of different vibration intensities. The various control programs may include a program for loading the pulse waveform data for generating an actuator drive signal that generates vibration corresponding to the input information in a case where information indicating the touch operation of the operator is input, and generates the actuator drive signal in accordance with the read pulse waveform data.

The auxiliary memory device may be a storage medium that is attachable to and detachable from the vibration presentation device. In addition, the control section may be configured to be communicable with the outside, and the programs and the like may be downloaded from the outside to the control section (main memory device or auxiliary memory device) via a communication network. The main memory device and the auxiliary memory device described above are examples of a non-transitory computer-readable storage medium.

<Vibration Presentation Device 100>

FIG. 17 is a diagram showing an example of a vibration presentation device including the vibration actuator. In FIG. 17, for convenience, a planar track pad body on which the operator performs a pressing operation with a finger is shown in a transparent manner.

Vibration presentation device 100 is, for example, a track pad as a pointing device used instead of a mouse in a notebook computer or the like. The track pad as vibration presentation device 100 is disposed in a rectangular opening portion provided in a housing of a notebook computer or the like. The track pad includes plate-shaped pad body 110 that is touched with a finger as a touch operation, vibration actuator 10 disposed on a back surface of pad body 110, and frame part 130 that surrounds vibration actuator 10.

When a touch operation such as tracing or tapping pad body 110 with a finger is performed, vibration actuator 10 imparts vibration serving as a tactile sensation. Specifically, in vibration actuator 10, coil 50 is energized in response to the touch operation of the user on pad body 110 that is the operation surface, coil 50 is displaced to approach base part 30 and vibrates, and the user is presented with a tactile sensation. For example, pad body 110 is fixed to movable part 20 of vibration actuator 10 on the back surface side of the central portion thereof with a double-sided tape or the like. Vibration actuator 10 is fixed to a bottom surface portion of frame part 130 via base part 30. In addition, an outer peripheral portion of pad body 110 is movably attached to the frame body 130 via a damping member.

In addition, in vibration actuator 10, base part 30 and plate-shaped elastic part 40 are fixed to each other, and plate-shaped elastic part 40 and movable part 20 are fixed to each other by using an adhesive or welding as a fastening member. A screw may be used as the fastening member.

(Embodiment 2)

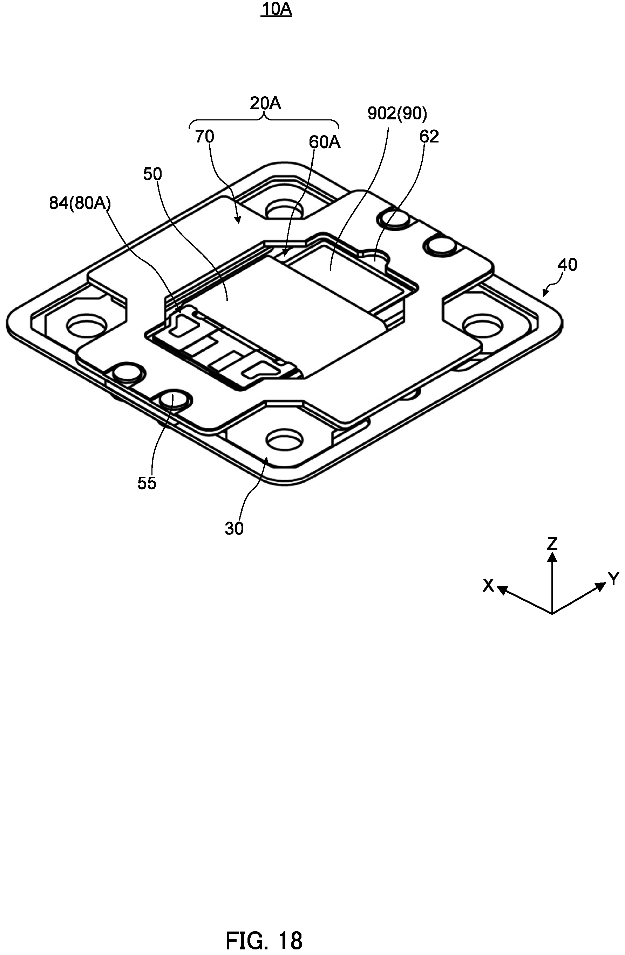

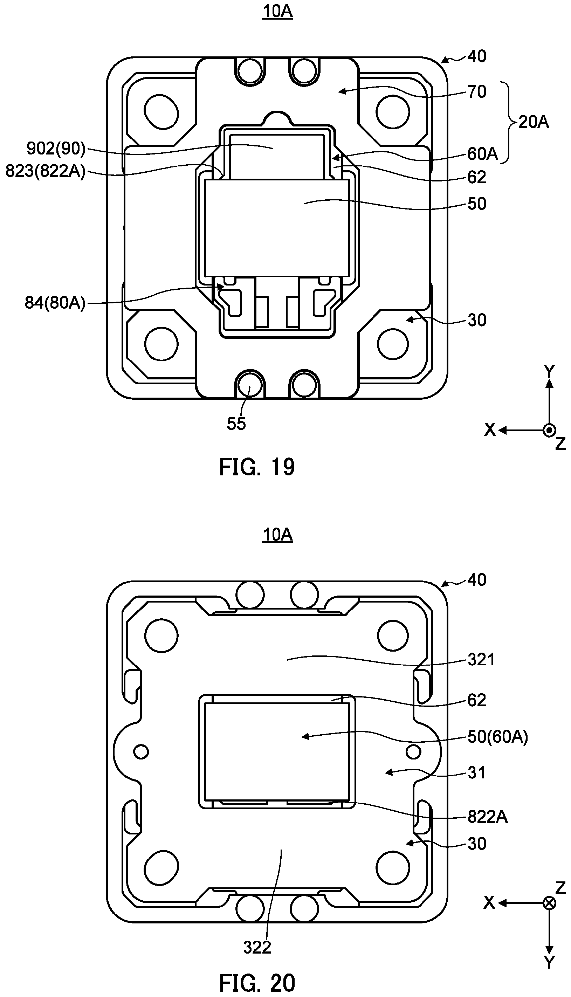

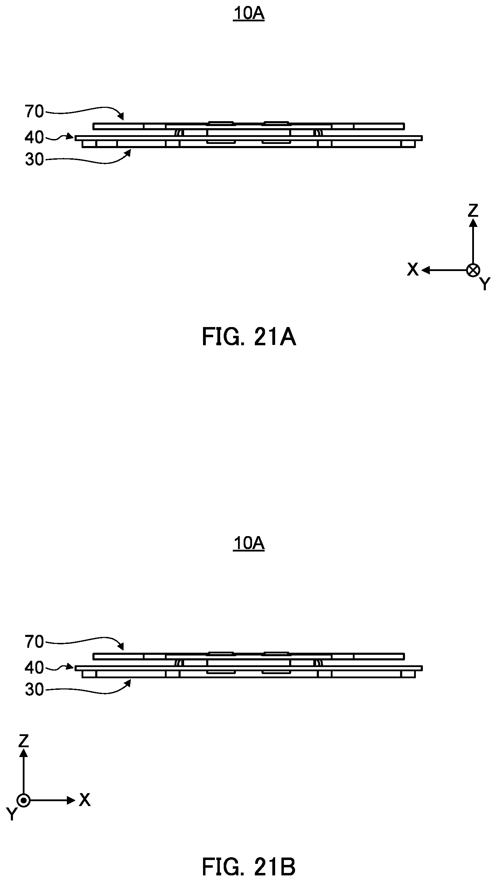

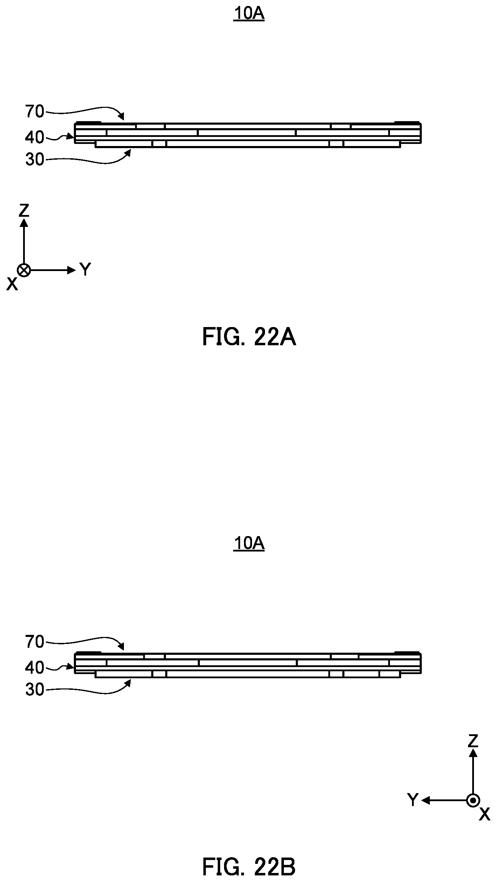

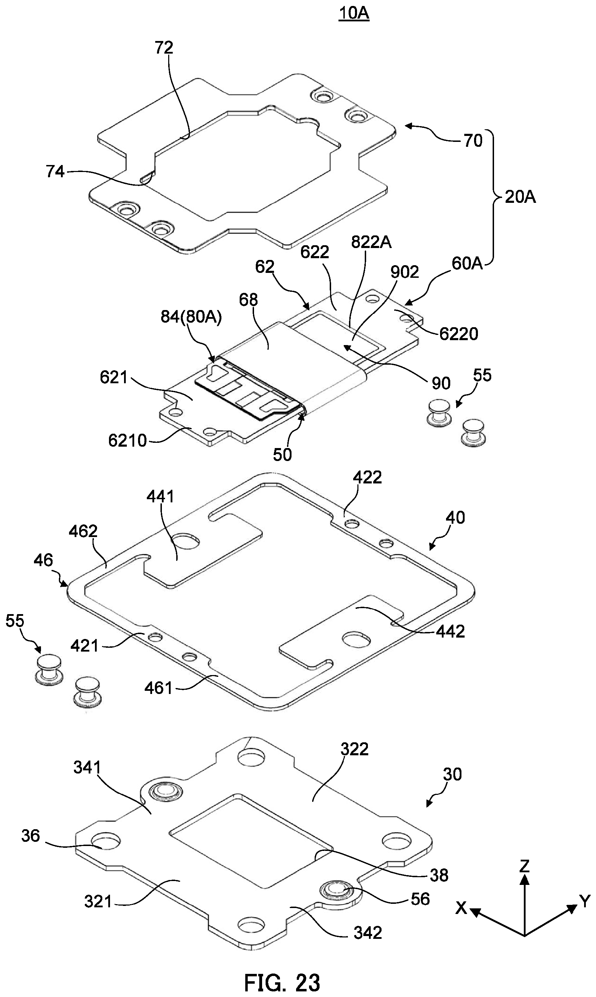

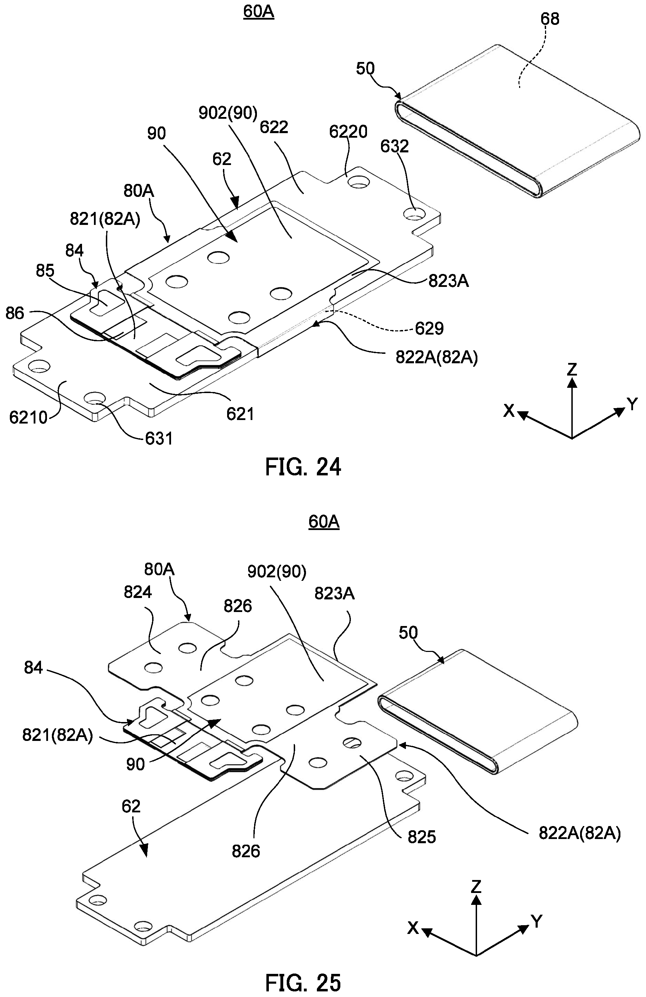

FIG. 18 is an external perspective view of a vibration actuator according to Embodiment 2 of the present invention, FIG. 19 is a plan view of the vibration actuator, and FIG. 20 is a bottom view of the vibration actuator. In addition, FIGS. 21A and 21B are a front view and a rear view of the vibration actuator, FIGS. 22A and 22B are a right side view and a left side view of the vibration actuator, and FIG. 23 is an exploded perspective view of the vibration actuator according to Embodiment 2 of the present invention. In addition, FIG. 24 is a perspective view showing a state in which the coil is removed from the core body of the vibration actuator according to Embodiment 2 of the present invention, and FIG. 25 is an exploded perspective view of the core body.

Vibration actuator 10A according to Embodiment 2 shown in FIGS. 18 to 25 is different from vibration actuator 10 corresponding to Embodiment 1 shown in FIG. 1 only in a configuration of board 80A in core body 60A, and other configurations are the same. Hereinafter, in vibration actuator 10A of Embodiment 2, the same reference numerals will be given to the same parts as vibration actuator 10 of Embodiment 1, and the different parts will be mainly described.

Vibration actuator 10A has a heat dissipation (heat absorption) function in addition to the insulating function in board 80A that is a flexible board of core body 60A, to insulate core 62 and coil 50. That is, in core body 60A of movable part 20A, board 80A includes heat dissipation section 90 in addition to interconnection section 84 and insulation section 822A on insulating sheet 82A.

Heat dissipation section 90 is disposed on insulation section 822A and dissipates heat generated by coil 50. Heat dissipation section 90 is a film-shaped body or a plate-shaped body composed of a member having thermal conductivity, and is composed of a copper foil that is entirely disposed on surface covering portion 823A of insulation section 822A.

The copper foil is not provided with a coverlay, and one end portion of the copper foil extends from a portion of core 62 surrounded by coil 50 and is exposed to the outside. The copper foil functions as a heat sink. Heat dissipation section 90 consisting of the copper foil is disposed between surface covering portion 823A of insulating sheet 82A and coil 50 on core 62 in core body 60A.

Surface covering portion 823A is formed larger on one end 6220 side than a region covered with coil 50, and heat dissipation section 90 is disposed over an entire surface of surface covering portion 823A. Heat dissipation section 90 is disposed to have a protruding portion (extending portion) 902 that protrudes outward from coil 50 on a side opposite to interconnection section 84 (one end 6220 side) from between insulating sheet 82A (or core 62) and coil 50.

Protruding portion 902 functions as a heat sink, and even when coil 50 is heated by driving vibration actuator 10A, the heat can be efficiently dissipated from the inside of coil 50 to the outside of coil 50, and vibration actuator 10A can be suitably driven.

<Other Variations>

Each of the following other variations is formed by changing, adding, or the like a part of the configuration of vibration actuator 10, and in a case where the same functions as the above-described components are provided, the same names and reference numerals will be given and the description will be omitted. In addition, hereinafter, the above-described components will be represented by different names for convenience.

<Variation 1>

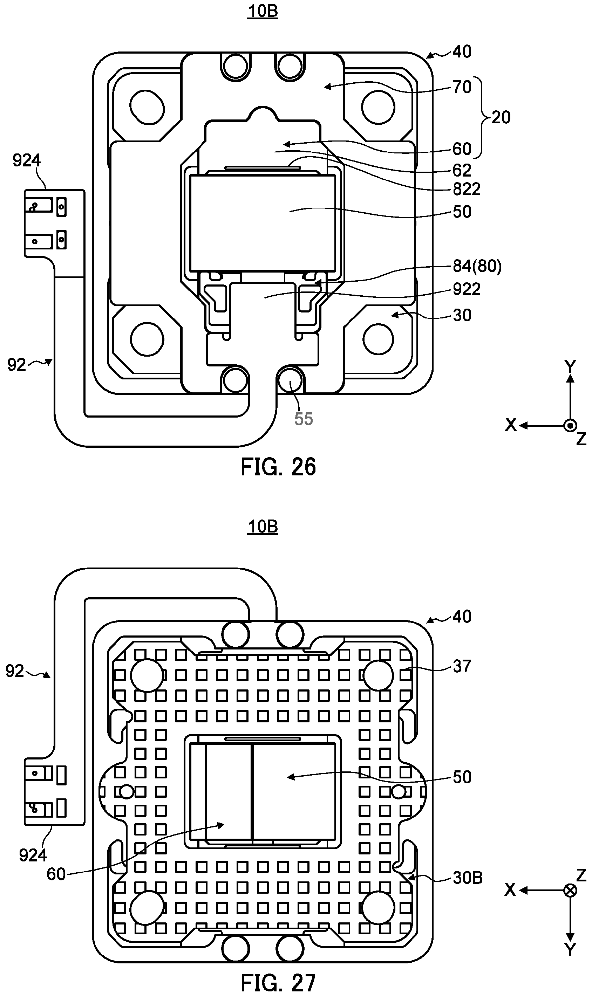

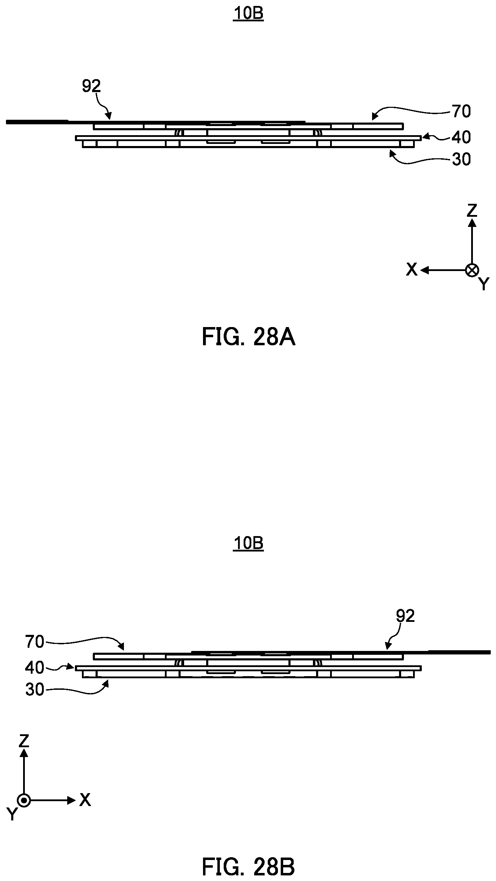

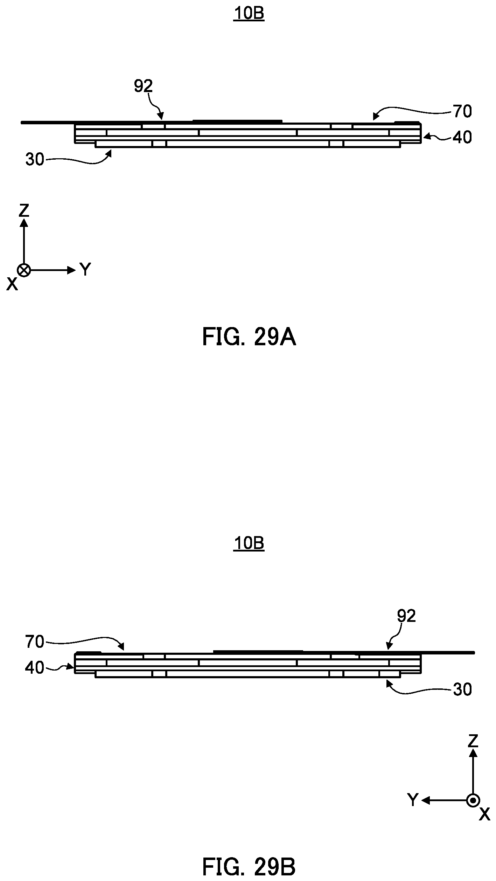

FIG. 26 is a plan view of the vibration actuator of Variation 1, and FIG. 27 is a bottom view of the vibration actuator of Variation 1. In addition, FIGS. 28A and 28B are a front view and a rear view of the vibration actuator of Variation 1, and FIGS. 29A and 29B are a right side view and a left side view of the vibration actuator of Variation 1.

In vibration actuator 10B of Variation 1, in the configuration of vibration actuator 10 (see FIGS. 1 to 14), external connection section 92 that relays the connection to an external device from the plane side is connected to interconnection section 84 of board 80. External connection section 92 is formed of a flexible printed circuit, is formed in an L-shape along a part of an outer edge of vibration actuator 10B, and is provided to not come into contact with movable part 20, base part 30B, and the like at a portion other than the connection portion. External connection section 92 has interconnection-section connection portion 922 at one end portion and external connection terminal portion 924 at the other end portion.

Further, base part 30B is provided with a matrix-shaped recessed portion 37. Since base part 30B is provided with matrix-shaped recessed portion 37 to form protruding and recessed portions, the bonding area can be increased in a case of fixing base part 30B to the housing or the like, so that base part 30B can be fixed more firmly. Although the configuration is adopted in which the plurality of recessed portions 37 are provided in base part 30B to increase the bonding area, the present invention is not limited to this, and a configuration may be adopted in which a protruding portion is provided instead of recessed portion 37 to increase the bonding area in a case of fixing to a fixing target such as the housing by adhesion.

<Variation 2>

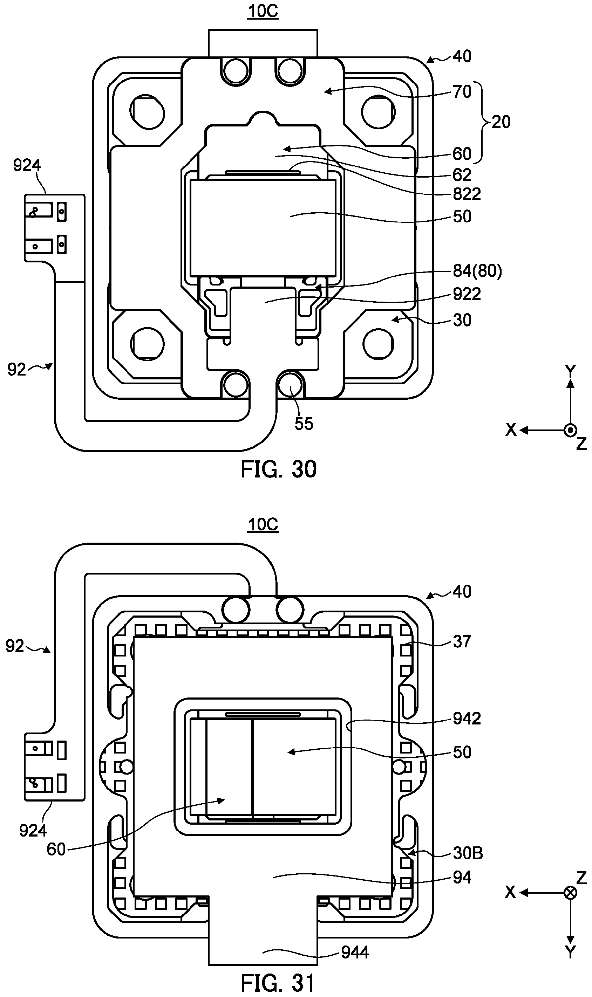

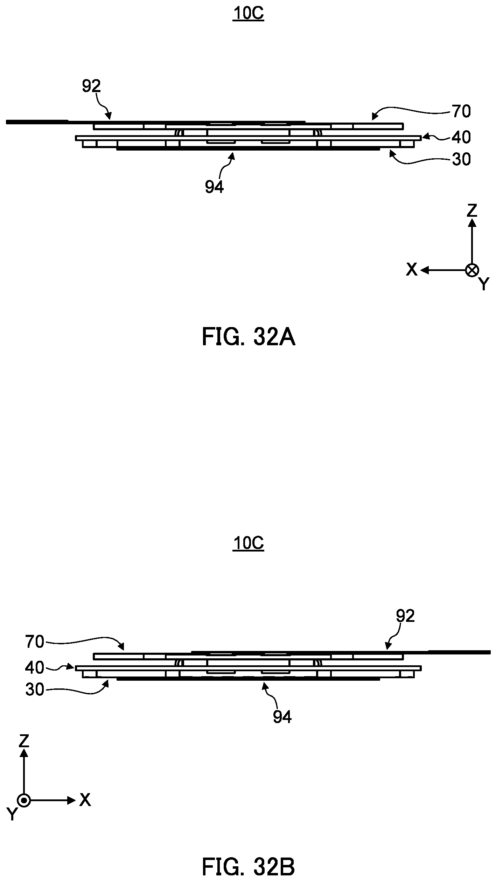

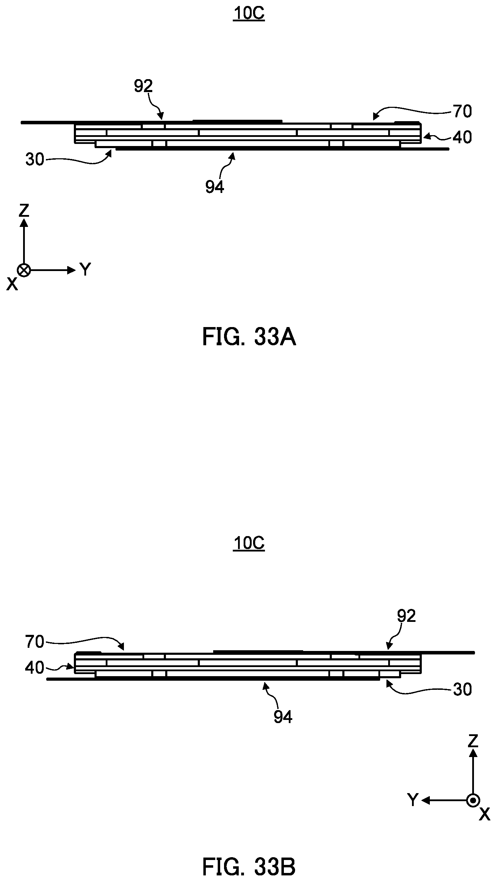

FIG. 30 is a plan view of the vibration actuator of Variation 2, and FIG. 31 is a bottom view of the vibration actuator of Variation 2. In addition, FIGS. 32A and 32B are a front view and a rear view of the vibration actuator of Variation 2, and FIGS. 33A and 33B are a right side view and a left side view of the vibration actuator of Variation 2.

Vibration actuator 10C of Variation 2 has a configuration in which fixing plate part 94 is attached to base part 30B in the configuration of vibration actuator 10B of Variation 1. Fixing plate part 94 is formed in a rectangular plate shape having opening portion 942 at a center, and has extending portion 944 that extends outward along a part of base part 30B.

Coil 50 is formed of a material having high conductivity, for example, copper. Core 62 is composed of a material having a high magnetic permeability (a ferromagnetic material, simply referred to as a magnetic body), and is preferably composed of SECC, a silicon steel plate, SUS, or the like. Plate-shaped elastic part 40 is preferably a non-magnetic material, and SUS, phosphor bronze, a resin, rubber, or the like may be applied as a non-magnetic material constituting the plate-shaped elastic part and the elastic body. In addition, base parts 30, 30B are preferably composed of a material having a high magnetic permeability, for example, SECC, a silicon steel plate, or SUS (ferromagnetic SUS). Plate-shaped weight part 70 is formed of a high specific gravity material, phosphor bronze, SUS, tungsten, or the like.

In the present embodiment, vibration actuators 10, 10A, 10B, and 10C are described, but the same configurations may be provided in actuators 10, 10A, 10B, and 10C.

The embodiment of the present invention has been described above. The above description is an example of a suitable embodiment of the present invention, and the scope of the present invention is not limited thereto. That is, the configuration of the device and the shape of each part are merely an example, and it is obvious that various modifications and additions to these examples are possible within the scope of the present invention.

The disclosure of Japanese Patent Application No. 2023-141710 filed on August 31, 2023, including the specification, drawings, and abstract, is incorporated herein by reference in its entirety.

Industrial Applicability

The vibration actuator and the contact-type input device according to the present invention have an effect of improving assemblability, being reduced in thickness, and being suitably vibrated, and are useful, for example, as a vibration presentation device used in a contact-type input device such as a track pad and an operation panel.

Reference Signs List

10, 10A, 10B, 10C Vibration actuator
12 Switching element
14 Signal generation section
20, 20A Movable part
30 Base part
30B Base part
31 Base body portion
36 Fixing portion
37 Recessed portion
38 Opening portion
40 Plate-shaped elastic part (elastic supporting part)
46 Elastic body portion
50 Coil
55 Fastening member
60, 60A Core body
62 Core
68 Protective film part
70 Plate-shaped weight part
72, 74 Opening portion
80, 80A Board
82, 82A Insulating sheet
84 Interconnection section
85 Coil-interconnection land portion
86 External-connection land portion
90 Heat dissipation section
92 External connection section
94 Fixing plate portion
100 Vibration presentation device
110 Pad body
130 Frame part
311 Side portion (X side portion)
312 Side portion (Y side portion)
321, 322 Facing portion
341, 342 Spring connecting portion
421, 422 Movable-part-side fixing portion
441, 442 Base-part-side fixing portion
461, 462 Side portion
621 One end portion
622 Other end portion
629 Edge portion
631, 632 Spring connecting portion
821 Part
822, 822A Insulation section
823 Surface covering portion

824, 825 Back surface covering portion
826 Bendable portion
831 Hole
922 Interconnection-section connection portion
924 External connection terminal portion

**Claims**

1. A vibration actuator, comprising:

   a core;
   a coil disposed around the core; and
   a board integrally including an interconnection section and an insulation section, the interconnection section being disposed on the core and connected to the coil, the insulation section being disposed inside the coil and insulating the coil from the core.

2. The vibration actuator according to claim 1, wherein:

   the core is a plate-shaped body, and
   the insulation section is sheet-shaped and is disposed inside the coil to be wound around the core so as to cover a periphery of the core.

3. The vibration actuator according to claim 1, wherein:

   the interconnection section has a thickness larger than the insulation section on the core and is provided adjacent to the insulation section on the core, and
   the coil is disposed on the insulation section adjacent to the interconnection section.

4. The vibration actuator according to claim 1, wherein
   the insulation section includes a heat dissipation section.

5. The vibration actuator according to claim 4, wherein
   the heat dissipation section includes a protruding portion partly protruding outward from between the coil and the core.

6. The vibration actuator according to claim 1, further comprising:

   an electromagnet in which the coil is disposed at a central portion of the core and that includes the board;
   a plate that includes a magnetic body disposed to face both end portions of the core; and
   an elastic supporting part that supports the core at both sides of the coil and is connected to the plate, wherein by a magnetic force generated by energizing the coil through the board, one of the coil or the plate is displaced to approach the other and vibrates.

7. The vibration actuator according to claim 1, further comprising:
   a frame-shaped weight part that is attached to the core and includes an opening in a region of the coil and a region of the interconnection section.

8. A contact-type input device in which the vibration actuator according to claim 6 is disposed on a back surface of an operation surface, wherein
   the coil is energized in response to a touch operation of a user on the operation surface, one of the coil or the plate is displaced to approach the other and vibrates, and a tactile sensation is presented to the user.

FIG. 1

FIG. 2

FIG. 3

10

70

40

30

Z

X ⊗ Y

FIG. 4A

10

70

40

30

Z

Y ⊙ X

FIG. 4B

10

70
40
30

Z
X Y

FIG. 5A

10

70
40
30

Z
Y X

FIG. 5B

10

70    50    62

40

30

38

322

G

Z
X⊗Y

FIG. 6

10

84(80)    822(80)

70    62    50

40

30

321    38

322

G

Z
X⊗Y

FIG. 7

FIG. 8

FIG. 9

FIG. 10

80

FIG. 11

<u>60</u>

84 ABUTTING 50 62

621 622

FIG. 12

<u>60</u>

50

80 ABUTTING 822(82) 62
84 t
821(82)
50

FIG. 13

FIG. 14

EP 4 772 288 A1

FIG. 15

FIG. 16

100

110

10 20 30 120 130

FIG. 17

<u>10A</u>

FIG. 18

<u>10A</u>

FIG. 19

<u>10A</u>

FIG. 20

10A

70

40

30

Z

X ← ⊗ Y

## FIG. 21A

10A

70

40

30

Z

Y ⊙ → X

## FIG. 21B

10A

FIG. 22A

10A

FIG. 22B

10A

FIG. 23

60A

FIG. 24

60A

FIG. 25

10B

FIG. 26

10B

FIG. 27

10B

FIG. 28A

10B

FIG. 28B

10B

FIG. 29A

10B

FIG. 29B

<u>10C</u>

FIG. 30

<u>10C</u>

FIG. 31

<u>10C</u>

92        70

40

30

94

Z

X ← ⊗ Y

# FIG. 32A

<u>10C</u>

92

70

40

30

94

Z

Y ⊙ → X

# FIG. 32B

10C

FIG. 33A

10C

FIG. 33B

# EP 4 772 288 A1

## INTERNATIONAL SEARCH REPORT

International application No.

**PCT/JP2024/031167**

### A. CLASSIFICATION OF SUBJECT MATTER

***B06B 1/04***(2006.01)i; ***G06F 3/041***(2006.01)i
FI: B06B1/04 S; G06F3/041 480

According to International Patent Classification (IPC) or to both national classification and IPC

### B. FIELDS SEARCHED

Minimum documentation searched (classification system followed by classification symbols)

B06B1/04; G06F3/041

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2023-76651 A (MINEBEAMITSUMI INC.) 01 June 2023 (2023-06-01) paragraphs [0013]-[0081], fig. 1-9 | 1, 4-6 |
| A | paragraphs [0013]-[0081], fig. 1-9 | 2-3, 7-8 |
| Y | WO 2005/018071 A1 (KOMATSU, Fumito) 24 February 2005 (2005-02-24) p. 7, line 29 to p. 7, line 39, fig. 3, 8 | 1, 4-6 |
| Y | JP 2002-209357 A (YASKAWA ELECTRIC CORP.) 26 July 2002 (2002-07-26) paragraph [0005], fig. 1-2 | 1, 4-6 |
| A | JP 2013-207965 A (FUJITSU GENERAL LIMITED) 07 October 2013 (2013-10-07) | 1-8 |
| A | JP 2010-142041 A (KABUSHIKI KAISHA TOSHIBA) 24 June 2010 (2010-06-24) | 1-8 |
| A | JP 2017-188982 A (MITSUBA CORPORATION) 12 October 2017 (2017-10-12) | 1-8 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 October 2024** | **22 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

41

## INTERNATIONAL SEARCH REPORT
### Information on patent family members

International application No.

**PCT/JP2024/031167**

| Patent document cited in search report | | | Publication date (day/month/year) | Patent family member(s) | | | Publication date (day/month/year) |
|---|---|---|---|---|---|---|---|
| JP | 2023-76651 | A | 01 June 2023 | US paragraphs [0029]-[0097], fig. 1-9 WO EP CN | 2022/0111418 2020/111043 3888806 113165016 | A1 A1 A1 A | |
| WO | 2005/018071 | A1 | 24 February 2005 | US paragraph [0058], fig. 3, 8 GB KR CN TW | 2006/0238059 2421360 10-2006-0064637 1836358 200509503 | A1 A A A A | |
| JP | 2002-209357 | A | 26 July 2002 | (Family: none) | | | |
| JP | 2013-207965 | A | 07 October 2013 | (Family: none) | | | |
| JP | 2010-142041 | A | 24 June 2010 | (Family: none) | | | |
| JP | 2017-188982 | A | 12 October 2017 | (Family: none) | | | |

Form PCT/ISA/210 (patent family annex) (July 2022)

**EP 4 772 288 A1**

**Patent documents cited in the description**

- JP 2015070729 A

- JP 2023141710 A